**Europäisches Patentamt**

**European Patent Office**

**Office européen des brevets**

(19)

(11) Veröffentlichungsnummer : **0 463 218 B1**

(12) # EUROPÄISCHE PATENTSCHRIFT

(45) Veröffentlichungstag der Patentschrift :
**23.11.94 Patentblatt 94/47**

(51) Int. Cl.⁵ : **F23C 9/00,** F23C 11/00,
F23L 15/02, F23L 15/04,
F23B 1/14

(21) Anmeldenummer : **90112392.7**

(22) Anmeldetag : **29.06.90**

(54) **Verfahren und Vorrichtung zum Verbrennen von Brennstoff in einem Verbrennungsraum.**

(43) Veröffentlichungstag der Anmeldung :
**02.01.92 Patentblatt 92/01**

(45) Bekanntmachung des Hinweises auf die
Patenterteilung :
**23.11.94 Patentblatt 94/47**

(84) Benannte Vertragsstaaten :
**AT BE CH DE DK ES FR GB GR IT LI LU NL SE**

(56) Entgegenhaltungen :
**EP-A- 0 194 000
DE-A- 2 303 280
DE-A- 3 422 229
US-A- 4 104 018
US-A- 4 378 205
US-A- 4 519 993
US-A- 4 541 796**

(73) Patentinhaber : **Wünning, Joachim, Dr.-Ing.
Berghalde 20
D-71229 Leonberg (DE)**

(72) Erfinder : **Wünning, Joachim, Dr.-Ing.
Berghalde 20
D-71229 Leonberg (DE)**

(74) Vertreter : **Rüger, Rudolf, Dr.-Ing. et al
Patentanwälte
Dr.-Ing. R. Rüger
Dipl.-Ing. H.P. Barthelt
Webergasse 3
D-73728 Esslingen (DE)**

**Beschreibung**

Die Erfindung betrifft ein Verfahren zum Verbrennen von Brennstoff in einem Verbrennungsraum und eine Vorrichtung zur Durchführung dieses Verfahrens

Das klassische Verfahren zur Umwandlung von Brennstoffenergie in Wärme ist die Oxidation des Brennstoffs mit einem Oxidationsmittel in Flammen. Bei der Verbrennung natürlicher Stoffe (Kohle, Kohlenwasserstoff mit Luft) liegt die Flammentemperatur im Bereich von etwa 1600° bis 2000° C mit dem Vorteil, daß die Oxidation des Brennstoffes nach dem Zündvorgang in der Flammenfront auch unter ungünstigen Umständen (z.B. offenes Feuer in einem Kamin usw. ) von selbst weiterläuft. Dieses Prinzip wird auch bei der Verbrennung von gasförmgen oder flüssigen Brennstoffen mit Brennern beibehalten, wobei die Maßnahmen zur Stabilisierung der Flamme eine große Rolle spielen. Die Brenner im Leistungsbereich von einigen kW bis zu mehreren MW werden je nach Zufuhr von Brennstoff und Luft in Vormisch- und Mündungsmischbrenner eingeteilt. Bei letzteren kann die Verbrennungsluft zur Rückgewinnung der Abgaswärme bis zu sehr hohen Temperaturen vorgewärmt werden. Als relative Luftvorwärmung $\varepsilon$ bezeichnet man - etwas vereinfacht ausgedrückt - das Verhältnis der Verbrennungsluft-Vorwärmtemperatur zur Temperatur des Verbrennungs-Abgases beim Verlassen des Verbrennungsraums (beides in ° C). Bei sogenannten Rekuperatorbrennern werden in der Praxis Luftvorwärmgrade $\varepsilon$ von ungefähr 0,7 erreicht; bei sogenannten Regeneratorbrennern bis zu etwa 0,9.

Die Vorwärmung der Verbrennungsluft erlaubt es zwar, eine beträchtliche Energieeinsparung zu erzielen; sie erhöht aber die Flammentemperatur und führt damit zu einer sehr starken Erhöhung der thermischen NOx-Bildung. Diese Stickoxide sind wegen der durch sie bedingten Umweltbelastung unerwünscht. Es gibt deshalb gesetzliche Vorschriften, die die erlaubte NOx-Emission begrenzen, wobei die Tendenz besteht, die zulässigen Grenzwerte zunehmend abzusenken.

Bekannte NOx-arme Brenner arbeiten mit sogenannter Stufenverbrennung (DE-C- 34 22 229) und/oder Kühlung der Flamme durch zurückgeführtes Verbrennungsabgas (vgl. beispielsweise "Gas wärme international" Band 38 (1989, Heft 5, Juni/Juli, Seiten 283 bis 292; Seite 290)).

Zur Kühlung der Flamme und zur NOx-Absenkung wird dabei Abgas aus dem Verbrennungsraum entweder strömungstechnisch zurückgesaugt (innere Rezirkulation) oder von außen wieder zugeführt (äußere Rezirkulation). Wegen der Flammenstabilität ist die Abgasbeimischung auf maximal etwa 50%, bezogen auf die Verbrennungsluftmenge, begrenzt.

Mit einer äußeren Rezirkulation von gekühltem Abgas arbeitet auch ein Umwandlungsverfahren zur Entsorgung von chemisch gebundenem Stickstoff in industriellen Abgasströmen (US-A 4 519 993). Bei diesem zweistufigen Verfahren wird in einer ersten Stufe das mit den Stickstoffverbindungen beladene Schadstoffgas zusammen mit Brennstoff und Verbrennungsluft einem Brenner zugeführt, der in einer Reduktionszone einen heißen (1100 bis 1650° C) Verbrennungsabgasstrom erzeugt, in dem die Stickstoffverbindungen zu elementarem Stickstoff reduziert und als Folge eines Brennstoffüberschußes geringe Anteile von Brennbarem (maximal ca. 6,5%) enthalten sind. Diese Verbrennungsabgase werden in der zweiten Stufe in einer getrennten Reaktionskammer mit einem sauerstoffhaltigem Gas, z. Bsp. Luft oder einem Luft-/-abgasgemisch zusammengeführt, dessen Sauerstoffgehalt zu klein ist, um eine Flammenausbreitung in einem Temperaturbereich von etwa 860 bis 990° C zu ermöglichen. In dem von der von den Verbrennungsabgasen der ersten Stufe zugeführten Wärmemenge aufrechterhaltenen Temperaturbereich wird der in den Verbrennungsabgasen enthaltene geringe Anteil von Brennbarem restlos aufoxidiert, wobei eine Neubildung von $NO_x$ möglichst vermieden wird. Dem in den Kamin abströmenden Abgas der zweiten Stufe kann Nutzwärme entzogen werden, wobei von dem gekühlten Abgas vor den Eintritt in den Kamin ein Teil als Kühl- und Verdünnungsmittel für die erste und die zweite Stufe rezirkuliert wird. Bei diesem Verfahren geht es aber insbesondere um die Entsorgung von mit Stickstoffverbindungen beladenen Schadstoffströmen, beispielsweise den Abgasen von Nitrier- oder Ammoniakanlagen und nicht um die Beheizung von Industrieöfen oder dergleichen, d.h. die Erzeugung von Nutzwärme.

Daneben ist es auch bekannt, zur Flammenstabilisierung heißes Gas unmittelbar aus der Flamme an der Flammenwurzel zurückzuführen und bei mit fließfähigen Brennstoffen arbeitenden Brennern dieses heiße Abgas zunächst dem Brennstoffstrahl zuzuführen, um den Brennstoff, in der Regel Öl, vor der Verbrennung und der Zumischung der Verbrennungsluft zu verdampfen ( sogenannte "Blaubrenner"). Ein Beispiel hierfür ist in der DE-C- 23 03 280 beschrieben.

Abgesehen von der Verbrennung des Brennstoffs in Flammen ist auch eine sogenannte flammenlose Verbrennung des Brennstoffs bekannt, die technisch beispielsweise bereits bei Strahlungsbrennern angewandt wird ("Gas wärme international" Band 34 (1985) Heft 4, April, Seiten 162 bis 166). Die Oxidation des gasförmigen Brennstoffes findet dabei unmittelbar an der Oberfläche eines porösen, meist keramischen Körpers statt, der die Wärme durch Strahlung abgibt. Die relativ niedrige Temperatur bei der Oxidation führt zu einer geringen NOx-Bildung. Da der Brennstoff mit der Verbrennungsluft vorgemischt wird, kann die Verbrennungsluft aber nur wenig vorgewärmt werden, weil sonst eine vorzeitige Zündung oder eine thermische Zersetzung des Brennstoffes eintritt. Diese Brenner sind deshalb für größere Leistungen und höhere Temperaturen (über ca. 900° C) nicht wirtschaftlich genug; außerdem setzt die Form der Strahlungskörper der Anwendung Grenzen.

Schließlich ist es auch bekannt (US-A 4 378 205, US-A 4 541 796) zur Verringerung der $NO_x$ Bildung bei der Verbrennung von Brennstoff auf die Verwendung von Luft ganz oder zumindest weitgehend zu verzichten und statt dessen Sauerstoff oder mit Sauerstoff angereicherte Luft zu verwenden. Dabei wird der Sauerstoff (oder die mit Sauerstoff angereicherte Luft) in einer geschlossenen Brennkammer in Form von aus Düsen austretenden Strahlen durch einen im wesentlichen brennstoffreien Bereich geführt, in dem die Sauerstoffstrahlen sich mit durch Injektorwirkung aus dem Verbrennungsraum angesaugten Verbrennungsabgasen umhüllen und vermischen können. Mit dem sich so bildenden Verbrennungsabgas-/-Sauerstoffgemisch wird sodann Brennstoff unter Ausbildung einer Oxidationszone zusammengebracht, in der die eigentlichen Verbrennungsreaktionen zwischen den Sauerstoffstrahlen und der Brennstoffmenge (Erdgas) ablaufen. Weil dieses Verfahren an sich in einem Bereich instabiler Verbrennung arbeitet, in dem ohne besondere Maßnahmen eine Flammenfront unregelmäßig zwischen gegenüberliegenden Seiten des Verbrennungsraumes hin- und herläuft und damit unerwünschte Pulsationen erzeugt, muß in dem Verbrennungsraum eine kontinuierliche Stützflammenfront rings um die Mündung der Brennstoffdüse aufrechterhalten werden. Zu diesem Zwecke ist der für die Durchführung dieses Verfahrens bestimmte Brenner mit einer die Brennstoffdüse umgebenden Ringdüse versehen, durch die ein bestimmter Anteil (5 bis 10%) des zugeführten Sauerstoffs eingeleitet wird, der mit einem entsprechenden Teil des aus der Brennstoffdüse austretenden Brennstoffs reagiert und dabei die sichtbare dauernd unterhaltene Flammenfront erzeugt, die die für eine stabile Oxidation des Brennstoffs in der Oxidationszone erforderlichen Bedingungen schafft. Die Verwendung von technisch hergestelltem Sauerstoff als Oxidationsmittel ist aufwendig und bei einer Reihe von Anwendern unerwünscht.

Aufgabe der Erfindung ist es deshalb, ein Verfahren und eine Vorrichtung zu schaffen, die es erlauben, die Oxidation von Brennstoffen mit Luft unter weitgehender Ausnutzung der bei der Oxidation frei werdenden Wärme und dabei bei geringer Bildung von Stickoxiden (Nox) durchzuführen.

Zur Lösung dieser Aufgabe wird bei dem eingangs genannten Verfahren erfindungsgemäß entsprechend den Merkmalen des Patentanspruches 1 vorgegangen.

Das neue Verfahren arbeitet mit normaler Verbrennnungsluft und einer extrem hohen Verbrennungsabgasrückführung ($r \geqq 2$), so daß selbst bei vollständiger Luftvorwärmung ($\varepsilon = 1$) die bei der Oxidation auftretenden maximalen Temperaturen ($\leqq 1500°$ C) niedriger liegen als bei der Verbrennung des Brennstoffs in Flammen. Trotz hoher Luftvorwärmung und damit optimaler Ausnutzung der Abgaswärme sind die bei der flammenlosen Oxidation auftretenden NOx-Werte weit unter die Werte abgesenkt, die bei einer Verbrennung des Brennstoffes mit Flammen ohne Vorwärmung der Verbrennungsluft auftreten würden. Das neue Verfahren hat somit den bisher bestehenden Zielkonflikt zwischen einer Energieeinsparung durch Luftvorwärmung und einer möglichst weitgehenden Vermeidung des Auftretens von Stickoxiden praktisch vollständig beseitigt. Außerdem geht, wie die Praxis bestätigt hat, im Vergleich zu der bei der Verbrennung mit Flammen auftretenden Geräuschentwicklung der Geräuschpegel im Verbrennungsraum bei dem neuen Verfahren drastisch zurück, weil die für die Geräuschentwicklung maßgebenden Druckschwankungen in der Flammenfront entfallen. Es wird eine stabile, d.h. pulsationsfreie sowie flammenlose Verbrennung des Brennstoffes mit Luft ohne Stützflamme erzielt.

Die Rückführung der durch Nutzwärmeentzug teilweise herabgekühlten Verbrennungsabgase aus dem Verbrennungsraum und deren Vermischung mit der vorgewärmten Verbrennungsluft kann an sich in verschiedener Weise geschehen, wobei die Verbrennungsluft in Form von aus Düsen austretenden Luftstrahlen durch einen im wesentlichen brennstofffreien Bereich geführt wird, in dem die Luftstrahlen sich mit durch Injektorwirkung aus dem Verbrennungsraum angesaugten Verbrennungsabgasen umhüllen und vermischen können. Dabei ist es von Vorteil, wenn die Luftstrahlen kranzförmig angeordnet werden und die Brennstoffzufuhr in dem von den Luftstrahlen umschlossenen Bereich in einem vorbestimmten Abstand hinter der Düsenöffnung erfolgt. Bei dieser Art der Anordnung der Luftstrahlen und der Brennstoffzufuhr wird der Brennstoff von den Luftstrahlen eingeschlossen, was sich günstig auf den vollständigen Ausbrand auswirkt. Der Abstand, in dem der Brennstoff stromabwärts von den Düsenöffnungen zugeführt wird, hängt von den Bedingungen des Einzelfalles ab; sein optimaler Wert kann gegebenenfalls durch einige Versuche ermittelt werden. Sein Größtwert ist dadurch begrenzt, daß sich auf jeden Fall noch eine ausreichende Durchmischung des Brennstoffs mit den Verbrennungsabgas-/Verbrennungsluft-Strahlen ergibt.

Die Verbrennungsluft wird mit Rücksicht auf eine hohe Energieersparnis zweckmäßigerweise mit einem Luftvorwärmungsgrad $\varepsilon \geqq 0,6$ vorgewärmt, wobei in der Praxis die Ausnutzung der in den Verbrennungsabgasen enthaltenen Wärme nur dadurch begrenzt ist, daß die in die Atmosphäre abgeführten Verbrennungsabgase, beispielsweise wegen der sonst auftretenden Wasserdampfkondensation etc. eine bestimmte Mindesttemperatur behalten müssen.

Zur Vorwärmung der Verbrennungsluft werden, wie erwähnt, in der Regel Verbrennungsabgase verwendet, denen vorher Nutzwärme entzogen wurde. Grundsätzlich wäre es natürlich auch denkbar, für die Luftvorwärmung Abfallwärme zu verwenden, die von anderen Prozessen herrührt.

Um das verfahrensnotwendige Verbrennungsabgasrückführverhältnis einzustellen, wird bei der erwähnten kranzartigen Anordnung der Luftstrahlen der Mindestabstand benachbarter Düsenöffnungen mit Vorteil ≧ als der doppelte Düsenöffnungsdurchmesser gemacht. Auch hat es sich als zweckmäßig erwiesen, wenn die Strömungsgeschwindigkeit der Verbrennungsluft beim Austritt aus den Düsenöffnungen mindestens 20 m/sec beträgt. Dieser Mindestwert läßt noch genügend Spielraum für ein großes Regelverhältnis, beispielsweise von 10:1. Bei der flammenlosen Oxidation nach dem neuen Verfahren gibt es nämlich keine Stabilitätskriterien, wie sie beispielsweise bei einer Flammenverbrennung, beispielsweise durch die Flammenstabilität, gegeben sind.

In bestimmten Fällen bei hohem Nutzwärmeentzug kann es notwendig werden, daß das Verbrennungsabgas-/-Luftgemisch beispielsweise im Anfahrbetrieb durch Zufuhr von Fremdwärme zumindest in der Oxidationszone auf Zündtemperatur gehalten wird. Andererseits oder zusätzlich besteht auch die Möglichkeit, in der Oxidationszone die Zündtemperatur katalytisch, d.h. durch Verwendung von Katalysatoren, herabzusetzen.

Um die flammenlose Oxidation des Brennstoffs in Gang zu setzen, muß zum einen eine ausreichende Verbrennungsabgasmenge zum Zumischen zu der Verbrennungsluft zur Verfügung stehen und zum anderen muß das Verbrennungsluft-/-abgasgemisch mindestens Zündtemperatur haben.

Diese Bedingungen können beim Anfahren aus kaltem Zustand naturgemäß grundsätzlich künstlich durch eine entsprechende Luftvorwärmung mit Fremdwärme geschaffen werden. Besonders einfache Verhältnisse ergeben sich aber, wenn bei diesem Anfahrbetrieb in dem Verbrennungsraum zunächst Brennstoff unter entsprechendem Luftüberschuß mit stabiler Flamme verbrannt wird, bis das Verbrennungsluft-/-Abgasgemisch mindestens auf Zündtemperatur gebracht werden kann und daß sodann durch entsprechende Veränderung der Verbrennungsluft- und/oder der Brennstoffzufuhr die Reaktionsbedingungen in der Oxidationszone auf die im wesentlichen flammenlose und pulsationsfreie Oxidation übergeleitet werden.

Bei der Untersuchung der flammenlosen Oxidation in der Oxidationszone wurde festgestellt, daß mit dem Verschwinden der Flammenerscheinung nicht nur das blaue Leuchten und die Flammengeräusche, sondern auch die sonst bei der Oxidation auftretende Strahlungsemission im UV-Bereich (ca. 190 bis 270 nm) verschwinden. Daraus kann ein wichtiges Hilfsmittel zur Optimierung und auch zur Überwachung des Oxidationsvorganges gewonnen werden, indem beim Anfahren die Lichtemission der Flamme im UV-Bereich und nach dem Einsetzen der im wesentlichen flammenlosen und pulsationsfreien Oxidation das Verschwinden dieser Lichtemission im UV-Bereich überwacht werden. Die Aussage der gewonnenen Meßwerte ist dabei gerade entgegengesetzt wie bei der Verbrennung mit Flammen. Bei einer solchen Verbrennung zeigt das Auftreten eines UV-Signals, daß die Flamme stabil brennt, während beim Erlöschen der Flamme das UV-Signal verschwindet.

Zur Überwachung der im wesentlichen flammenlosen und pulsationsfreien Oxidation wird deshalb mit Vorteil die strömungsabwärts hinter der Oxidationszone gemessene Temperaturerhöhung in dem Verbrennungsraum benutzt.

Das neue Verfahren kann für praktisch jede Art von Wärmegewinnung, insbesondere gewerblicher oder industrieller Anwendung, benutzt werden. Da die NOx-Werte selbst bei höchster Vorwärmung der Verbrennungsluft niedriger liegen als bei Flammenbetrieb mit Kaltluft, kann es zweckmäßig sein, auch bei Niedertemperaturprozessen (z.B. Warmwasserbereitung) durch Verkleinerung der Wärmetauscherflächen die Nutzwärmeauskopplung zu begrenzen und den verbleibenden Wärmeinhalt der Verbrennungsabgase durch Ausnutzung zum Zwecke der Verbrennungsluftvorwärmung zurückzugewinnen. Damit ergeben sich extrem niedrige NOx- und Schallemissionen, während gleichzeitig der apparative Aufwand gering und platzsparend ist.

Das neue Verfahren kann mit gasförmigem oder flüssigem (zerstäubtem oder verdampftem) Brennstoff durchgeführt werden, doch eignet es sich auch zur Verbrennung von festen Brennmaterialien, die unter Erzeugung brennbarer Gase zumindest teilweise thermisch zersetzt (vergast) werden können. Es kann in sogenannten Rekuperatorbrennern, in sogenannten Regenerativbrennern oder auch in Anlagen zum Verbrennen von Kohle, Müll, Abfallstoffen und anderen brennbaren Materialien eingesetzt werden.

Eine zur Durchführung des erläuterten Verfahrens eingerichtete Vorrichtung der eingangs genannten Art ist gemäß weiterer Erfindung durch die Merkmale des Patentanspruchs 13 gekennzeichnet.

Vorteilhafte Weiterbildungen und Ausgestaltungen dieser Vorrichtung sind Gegenstand von Unteransprüchen.

In der Zeichnung sind Ausführungsbeispiele des Gegenstandes der Erfindung dargestellt. Es zeigen:

Fig. 1    ein Diagramm zur Veranschaulichung des Ablaufs des erfindungsgemäßen Verfahrens,

Fig. 2    eine Vorrichtung zur Durchführung des erfindungsgemäßen Verfahrens in schematischer Schnittdarstellung, in einer Seitenansicht,

Fig. 3 die Vorrichtung nach Fig. 2, geschnitten längs der Linie III-III der Fig. 2 in schematischer Darstellung in der Draufsicht,

Fig. 4 einen Rekuperatorbrenner gemäß der Erfindung in schematischer Darstellung, im Längsschnitt und in einer Seitenansicht,

Fig. 5 die Anordnung der Verbrennungsluft-Düsen des Rekuperatorbrenners nach Fig. 4, in einer Draufsicht,

Fig. 6 einen Regeneratorbrenner gemäß der Erfindung in einem axialen Längsschnitt, in schematischer Darstellung und in einer Seitenansicht,

Fig. 7 den Rekuperatorbrenner nach Fig. 6 in einer schematischen stirnseitigen Ansicht von der Düsenseite her,

Fig. 8 eine Verbrennungsvorrichtung gemäß der Erfindung für feste Brennmaterialien, in einem axialen Längsschnitt in schematischer Darstellung und in einer Seitenansicht,

Fig. 9 die Vorrichtung nach Fig. 8, geschnitten längs der Linie VIII-VIII der Fig. 8 in einer Draufsicht und

Fig.10 ein Diagramm zur Veranschaulichung der bei verschiedenen Verbrennungsvorgängen auftretenden NOx-Bildung in Abhängigkeit von der Verbrennungsluftvorwärmung,

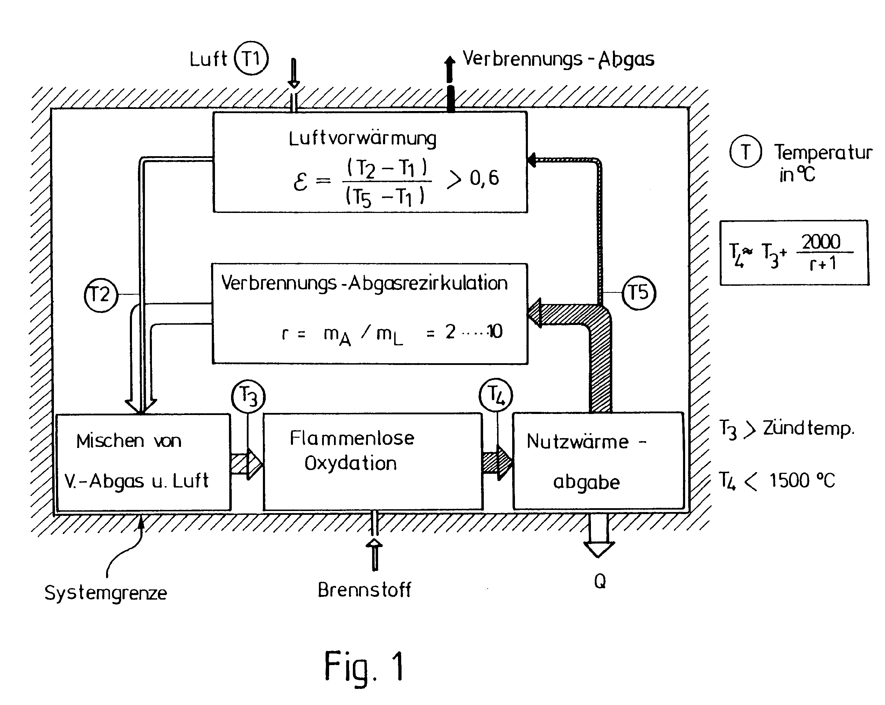

Das neue Verfahren dient dazu, unter kontrollierten Bedingungen bei niedrigen Temperaturen ($\leqq 1500°$ C) Brennstoff mit hoch vorgewärmter Luft NOx-arm zu oxidieren. Sein grundsätzlicher Ablauf soll zunächst anhand der Fig. 1 bis 3 erläutert werden:

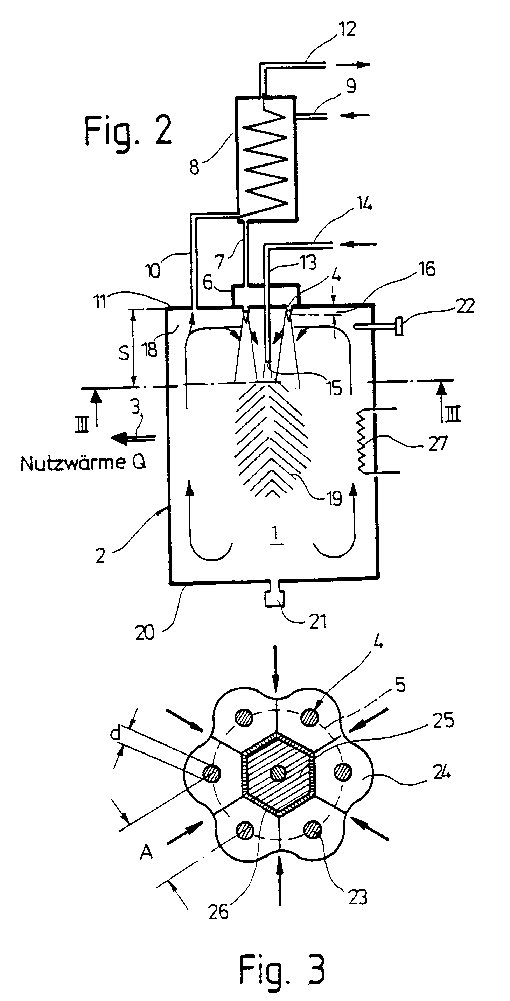

In den Fig. 2, 3 ist eine Vorrichtung zur im wesentlichen flammenlosen und impulsfreien Oxidation eines gasförmigen Brennstoffes (beispielsweise Erdgas) schematisch dargestellt. Diese Vorrichtung weist einen abgeschlossenen Verbrennungsraum 1 auf, der in einer bei 2 angedeuteten Kammer sich befindet, von deren Außenwand Nutzwärme Q abgeführt werden kann, was durch einen Pfeil 3 veranschaulicht ist. Im Bereiche einer Stirnwand der im wesentlichen zylindrischen Kammer 2 sind sechs Düsen 4 vorgesehen, die mit den Achsen ihrer Düsenöffnungen auf einem gemeinsamen Kreis 5 (Fig. 3) liegend kranzförmig angeordnet sind und mit einem mit der zugeordneten Kammerwandung verbundenen Luftverteilergehäuse 6 in Verbindung stehen. An das Luftverteilergehäuse 6 ist über eine Luftleitung 7 ein beispielsweise als Wärmetauscher ausgebildeter Luftvorwärmer 8 angeschlossen, dem Verbrennungsluft über einen Lufteinlaßstutzen 9 zugeführt werden kann.

Von dem Verbrennungsraum 1 geht seitlich neben den kranzartig angeordneten Verbrennungsluft-Düsen 4 eine Verbrennungsabgasleitung 10 ab, die den Verbrennungsraum 1 in der die Düsen 4 tragenden Stirnwand 11 mündet. Die Verbrennungsabgasleitung 10 führt zu dem Luftvorwärmer 8, von dem ein Abgasstutzen 12 abgeht, über den die ausgekühlten Abgase in die Atmosphäre abgeführt werden. In dem Luftvorwärmer 8 werden die über die Leitung 10 zuströmenden heißen Verbrennungsabgase im Gegenstrom zu der bei 9 zugeführten Verbrennungsluft geführt; sie geben dabei ihre Wärme an die Verbrennungsluft ab und wärmen diese vor.

In den Verbrennungsraum 1 mündet in dem von den kranzartig angeordneten Düsen 4 umschlossenen Bereich eine Brennstoffzufuhrleitung 13, die an einem Brennstoffzufuhrstutzen 14 angeschlossen ist und deren Mündung 15 in einem vorbestimmten Abstand von den Mündungen der Düsen 4 liegt, die ihrerseits gegenüber der Innenseite der Kammerwand 11 um einen bei 16 angedeuteten Betrag axial vorgezogen sind.

Wie aus Fig. 2 zu ersehen, liegt die Mündung 15 der Brennstoffzuführleitung 13 in einem vorbestimmten axialen Abstand stromabwärts von der Mündung der Düsen 4.

Der Achsabstand A der Öffnungen benachbarter Düsen 4 ist größer als der doppelte Durchmesser d einer Düsenöffnung; er liegt in der Praxis häufig zwischen 3 bis 10 d und größer.

Im stabilen Betrieb wird in den Verbrennungsraum 1 über die Düsen 4 Verbrennungsluft eingeführt, die aus den Öffnungen der Düsen 4 in Form von Luftstrahlen austritt, welche im wesentlichen achsparallel oder geringfügig schräg nach innen zur Achse der zentralen Brennstoffzufuhrleitung 13 zu geneigt sind. In dem Verbrennungsraum besteht eine Zirkulationsströmung heißer Verbrennungsabgase, die durch Pfeile 17 angedeutet ist und im Bereiche der Kammerwand 11 seitlich abgelenkt wird. Die aus den Düsen 4 austretenden Luftstrahlen durchqueren deshalb zunächst einen im wesentlichen brennstofffreien mit den zurückströmenden Verbrennungsabgasen gefüllten Raum, indem sie durch Injektorwirkung Verbrennungsabgase ansaugen und sich dabei mit Verbrennungsabgasen umhüllen sowie mit diesen vermischen. Es entstehen deshalb innerhalb einer Mischstrecke oder -zone 18 Verbrennungsluft-/-Abgas-Gemischstrahlen, in denen ein von außen nach innen gerichtetes Sauerstoffgefälle vorhanden ist, derart, daß die Außenzonen der Gemischstrahlen an Sauerstoff verarmt sind.

Zufolge der erwähnten Wahl des Verhältnisses des Düsenachsabstandes A und des Düsenöffnungsdurchmessers d wird erreicht, daß in der Mischstrecke 18 die vorgewärmte Verbrennungsluft mit dem aus dem Verbrennungsraum 1 zurückgesaugten Verbrennungsabgas in einem Verbrennungsabgasrückführverhältnis vermischt wird, das r ≧ 2 ist.

In das Verbrennungsabgas-/-Luftgemisch wird am Ende der Mischstrecke 18 aus der Brennstoffleitung 13 Brennstoff eingeführt, wobei die Tiefe der Mischstrecke 18 mindestens sechs mal dem Düsenöffnungsdurchmesser d ist. Die Mündung 15 der Brennstoffzuführleitung 13 liegt hier innerhalb der Mischstrecke 18.

Die in der beschriebenen Weise zurückgesaugten und mit der vorgewärmten Verbrennungsluft vermischten Verbrennungsabgase haben auf ihrem Rückweg an der Seitenwand der Kammer 2 Nutzwärme Q abgegeben; sie sind deshalb bereits etwas abgekühlt.

Die Verbrennungsluft-und Brennstoffzufuhr sind derart eingestellt, daß sich unter den gegebenen Bedingungen eine im wesentlichen flammenlose und pulsationsfreie Oxidation zwischen dem Brennstoff und der Verbrennungsluft ergibt, die in einer bei 19 angedeudeten Oxidationszone in dem Verbrennungsraum 1 stattfindet.

Diese im wesentlichen flammenlose und pulsationsfreie Oxidation ist dadurch ausgezeichnet, daß sie sehr geräuscharm und ohne Lichtemission, insbesondere auch im ultravioletten Bereich, abläuft. Ein in die der Kammerwandung 11 gegenüberliegende Kammerwandung 20 eingesetzter UV-Detektor 21 kann deshalb dazu verwendet werden, den im wesentlichen flammenlosen Ablauf der Oxidation zu überwachen. Sowie das von ihm abgegebene Signal verschwindet, d.h. keine UV-Strahlung auftritt, findet die Oxidation flammenlos statt. Zur Überwachung der Oxidation selbst dient ein Temperaturfühler 22, der in der Nähe der Kammerwandung 11 in den Verbrennungsraum 1 ragt.

Die zuvor geschilderten Verhältnisse in der Mischstrecke 18 sind in Fig. 3 schematisch veranschaulicht: Die aus den Öffnungen der kranzartig angeordneten Düsen 4 austretenden Verbrennungsluft-Kernstrahlen sind gestrichelt dargestellt und mit 23 bezeichnet. Sie umgeben sich mit einem Mantel angesaugter Abgase, so daß sich Verbrennungsabgas-/-Luftstrahlen ergeben, die bei 24 angedeutet sind und die eine Kernzone umgeben, in welche am Ende der Mischstrecke 18 Brennstoff eingebracht wird, wie dies bei 25 angedeutet ist. Die Oxidation dieses Brennstoffes beginnt an der mit 26 bezeichneten, schematisch angedeuteten Grenzzone zwischen dem brennstoffgefüllten Bereich und dem an Sauerstoff verarmten Außenbereich der Verbrennungsabgas-/-Luftstrahlen 24.

In dem Verbrennungsraum 1 ist noch eine Hilfsheizeinrichtung 27 angeordnet, die von dem rezirkulierenden Verbrennungsabgas durchströmt wird und es erlaubt, dieses beispielsweise im Anfahrbetrieb so weit aufzuheizen, daß das Verbrennungsabgas-/-Luftgemisch in der Mischstrecke 18 mindestens auf die Zündtemperatur gebracht wird.

Da die Verbrennungsluft aus den Düsen 4 mit verhältnismäßig hoher Geschwidigkeit (ca. 20 m/sec) austritt, ergibt sich in dem Verbrennungsraum 1 ein hoher Impulsstrom, der für einen schnellen Temperaturausgleich in dem Verbrennungsraum 1 sorgt. Gleichzeitig läßt sich eine hohe Energiedichte für die Nutzwärmeabfuhr erzielen.

Die Verfahrensschritte sind schematisch in Fig. 1 dargestellt, wobei gleichzeitig die bei den einzelnen Verfahrensstufen herrschenden Temperaturen angegeben sind.

Die von der Kammerwandung 2 abgeführte Nutzwärme Q wird aus dem ganzen System ausgekoppelt; sie steht deshalb nicht für die Luftvorwärmung zur Verfügung.

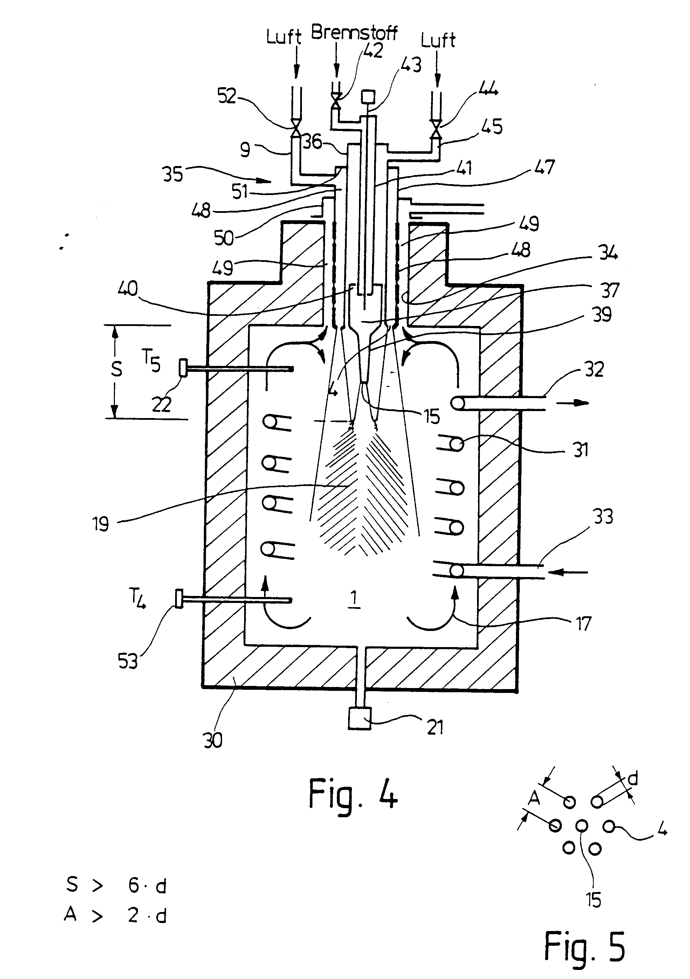

In den Fig. 4, 5 ist ein Industriebrenner in Gestalt eines sogenannten Rekuperaturbrenners dargestellt, der nach dem beschriebenen neuen flammenlosen Oxidationsverfahren arbeitet und grundsätzlich ähnlich der anhand der das Prinzip veranschaulichenden Fig. 2, 3 beschriebenen Vorrichtung aufgebaut ist. Gleiche Teile sind deshalb mit gleichen Bezugszeichen bezeichnet und nicht weiter erläutert. Der beispielsweise im Querschnitt ebenfalls zylindrische Verbrennungsraum 1 ist in diesem Falle in einer ummauerten Ofenkammer 30 enthalten, in der eine von einem Wärmeträgermittel, beispielsweise Wärmeträgeröl, durchströmte Rohrschlange 31 angeordnet ist, die von dem rückströmenden heißen Verbrennungsabgas umströmt ist und diesem Nutzwärme entzieht, bevor es in den Bereich der Verbrennungsluftdüsen 4 gelangt. Die Heizschlange 31 umgibt die flammenlose Oxidationszone 19; die Wärmeauskopplung erfolgt über einen Anschlußstutzen 32, während das kalte Wärmeträgermittel über einen Anschlußstutzen 33 zuströmt.

Die Brennkammer 30 weist eine stirnseitige koaxiale zylindrische Öffnung 34 auf, in die der insgesamt mit 35 bezeichnete Rekuperatorbrenner lösbar eingesetzt ist. Dieser ist mit einem einseitig verschlossenen zylindrischen Luftleitzylinder 36 ausgebildet, in den andernends eine zylindrische, topfförmige, keramische Brennkammer 37 eingesetzt ist. Die Brennkammer 37 ist mit einer in den Verbrennungsraum 1 ragenden halsartig vorgezogenen koaxialen Auslaßdüse 39 ausgebildet, deren Mündung wiederum mit 15 bezeichnet ist. Auf der gegenüberliegenden Seite ist die Brennkammer 37 mit Lufteinlaßöffnungen 40 versehen, die seitlich neben einer koaxialen, in die Brennkammer 37 ragenden Brennstoffzuführleitung 41 angeordnet sind, die durch ein Ventil 42 gesteuert ist und über die gasförmiger Brennstoff, beispielsweise Erdgas, zugeführt werden kann. Eine im Inneren der Brennstoffzuführleitung 41 liegende Zündlanze 43 erlaubt es, das im Inneren der Brennkammer 37 gebildete Gas-Luftgemisch mit Hochspannung elektrisch zu zünden, wie dies an sich bekannt ist.

Der Luftleitzylinder 36 kann über eine ein Ventil 44 enthaltende Leitung 45 mit Hilfs-Verbrennungsluft zum Anfahren beaufschlagt werden, wie dies im einzelnen noch erläutert werden wird.

Koaxial zu dem Luftleitzylinder 36 und diesen umgebend ist eine zylindrische Wand 47 angeordnet, die Teil eines Rekuperators ist und Wärmetauscherbleche 48 trägt, die einerseits in den mit dem Luftleitzylinder 36 begrenzten Ringraum 48 und andererseits in den Ringraum 49 ragen, der zwischen der Innenwandung der Öffnung 34 und der zylindrischen Wand 47 ausgebildet ist und sich in den Verbrennungsraum 1 öffnet. Diese Ringraum ist durch einen Deckel 50 verschlossen, von dem der Verbrennungsabgasstutzen 12 abgeht.

Der Ringraum 48 ist einenends bei 51 ebenfalls verschlossen, während er auf der gegenüberliegenden Seite in die in einem entsprechenden Ringblech kranzartig angeordneten Düsenöffnungen 4 mündet, die achsparallel angeordnet sind. An den Ringraum 48 ist über ein Ventil 52 der Verbrennungsluftzufuhrstutzen 9 angeschlossen.

Die kranzartige Anordnung der Öffnungen der Düsen 4 ist aus Fig. 5 zu ersehen. Im vorliegenden Falle sind sechs Düsen 4 vorgesehen, doch kann deren Zahl auch größer sein. Der Achsabstand A benachbärter Öffnungen der Düsen 4 ist wiederum größer als der doppelte Düsenöffnungsdurchmesser d. Die axiale Tiefe s der Mischstrecke 18 ist größer als das Sechsfache des Düsenöffnungsdurchmessers d. Zusätzlich zu dem Temperaturfühler 22 ist noch ein weiterer Temperaturfühler 53 vorhanden, der in der Nähe der unteren Innenwand der Ofenkammer 30 in den Verbrennungsraum 1 ragt und damit die Temperatur T5 (Fig. 1) der heißen Verbrennungsabgase vor dem Entzug der Nutzwärme mißt.

Der beschriebene Rekuperatorbrenner 35 arbeitet mit einem Verbrennungsgasrückführverhältnis $\varepsilon \geqq 2$; seine Wirkungsweise ist wie folgt:

Beim Anfahren aus dem kalten Zustand ist das Ventil 52 geschlossen oder stark gedrosselt, so daß die Düsen 4 nicht oder nur in stark vermindertem Maße mit Verbrennungsluft beaufschlagt sind. Das Ventil 44 ist geöffnet mit der Folge, daß Verbrennungsluft durch die Lufteinlässe 40 in die Brennkammer 37 eintritt.

Das Ventil 42 ist ebenfalls geöffnet; das in der Brennkammer 37 sich bildende Brennstoff/Luftgemisch wird mittels der Zündlanze 43 gezündet. Das teilverbrannte Gasgemisch tritt aus der Düse 39 aus und wird mit aus den Düsen 4 zugeführten Verbrennungsluft mit Flammenbildung vollständig verbrannt. Der Brenner arbeitet insoweit in herkömmlicher Weise.

Die bei dieser Flammenverbrennung entstehenden Abgase folgen dem bei 17 angedeuteten Strömungsweg und strömen durch den Ringkanal 49 und den Abgasstutzen 12 ab. Dabei wird der aus der zylindrischen Wand 47 und den Wärmetauscherblechen 48 gebildete Rekuperator abgasseitig aufgeheizt.

Sowie die abströmenden Verbrennungsabgase eine ausreichend hohe Temperatur erreicht haben, wird das Ventil 44 zumindest teilweise geschlossen, während gleichzeitig das Ventil 52 ganz geöffnet wird, so daß der Luftdurchsatz durch die Luftdurchlässe 40 der Brennkammer 37 abgesperrt oder auf mindestens 30% der Gesamtluftmenge gedrosselt wird und die Düsen 4 voll mit der Verbrennungsluft beaufschlagt werden.

Die aus den Öffnungen der kranzartig angeordneten Düsen 4 austretenden Strahlen der in dem Rekuperator 47, 48 vorgewärmten Luft umhüllen und mischen sich in der Mischstrecke 18 in anhand der Fig. 2, 3 bereits beschriebener Weise mit den rezirkulierten, durch Injektorwirkung angesaugten Verbrennungsabgasen und bilden ein Abgas-/Luftgemisch, dessen Temperatur T3 oberhalb der Zündtemperatur liegt. In dieses Gemisch wird am Ausgang der Mischstrecke 18 über die Düsenöffnung 15 der nunmehr lediglich mit Brennstoff beaufschlagten Brennkammer 37 der Brennstoff eingebracht.

Damit geht die vorher mit Flammen erfolgende Verbrennung in die flammenlose pulsationsfreie Oxidation des Brennstoffs in der Oxidationszone 19 über, womit der normale Betriebszustand des Rekuperatorbrenners 35 erreicht ist.

Die Brennstoffzufuhr wird durch entsprechende Steuerung des Ventiles 42 zweckentsprechend eingestellt. Die Oxidationsüberwachung erfolgt durch die Temperaturfühler 22, 53 sowie den UV-Flammendetektor 21, der mit dem Einsetzen der flammenlosen Oxidation kein kontinuierliches Signal mehr abgibt.

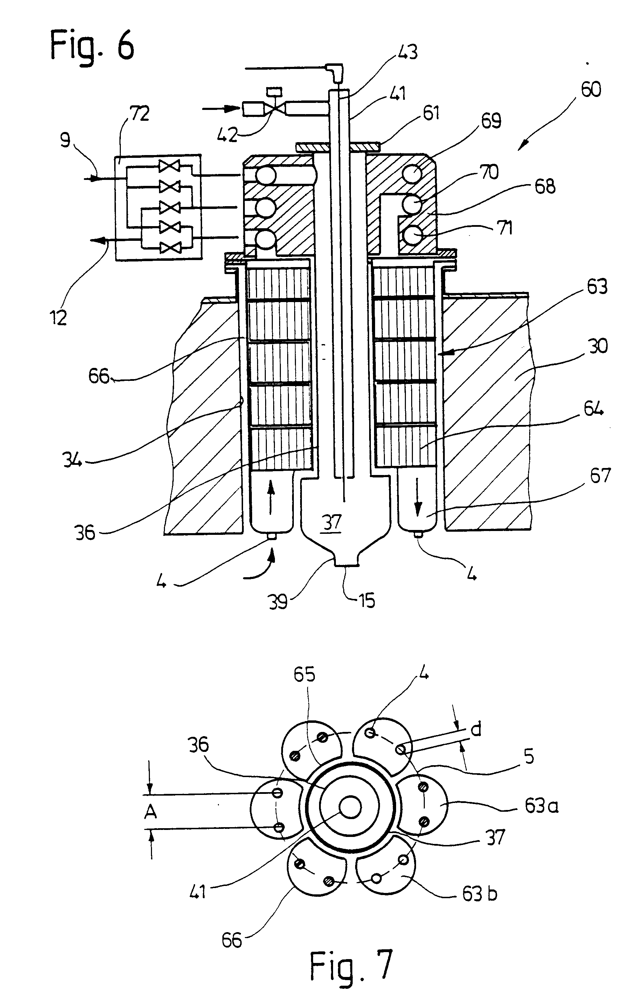

Im nachstehenden sei ein Ausführungsbeispiel für die Durchführung der im wesentlichen flammenlosen und pulsationsfreien kontrollierten Oxidation von Brennstoff in einem grundsätzlich entsprechend den Fig. 4, 6 ausgebildeten Rekuperatorbrenner angegeben:

Kontrollierte, flammenlose Oxidation von Brennstoff in Abgas/Luft-Strahlen

Rekuperatorbrenner stirnseitig eingebaut in einer Ofen- oder Brennkammer wie in Fig. 4.

Brennkammer (30) isoliert mit einer hochfeuerfesten Fasermatte.

Durchmesser, innen: 600 mm; Länge, innen: 2300 mm;
Wandverlust bei 1000° C: ca. 20 kW (entspricht Nutzwärme).

Rekuperatorbrenner mit zylindrischem Rippenrekuperator (47, 48) und mit keramischer Brennkammer (37) für den Flammenbetrieb ausgebildet.

```
Luftdüsen (4)  -  Anzahl              n: 12
               -  Durchmesser         d: 7 mm
               -  Kranzdurchmesser    D: 80 mm
               -  Achsabstand         A: 21 mm

Verbrennungsluft:                     25 m³/h
Erdgas:                               2,5 m³/h
Sauerstoff im Abgas:                  ca. 2 Vol.%
```

Flammenbetrieb bis 750° C mit ca. 70% Innenluft durch die Düse (39) und 30% Düsenluft durch die Düsen (4) als Sekundärluft (Stufen-Strahl-Brenner). Der Brenner wurde automatisch mit Hochspannung gezündet und durch einen UV-Flammendetektor (21) überwacht. Die Flamme leuchtet blau.

NO im trockenen Abgas bei 700° C: 80 ppm.

Für den Betrieb mit flammenloser Oxidation wird bei 750° C die gesamte Innenluft auf den Düsenkranz umgeschaltet. Die blaue Flamme verlöscht. Das UV-Signal flackert zunächst noch und verschwindet dann ganz.

Bei 1100° C Brennkammertemperatur betrug die Luftvorwärmung ca. 810° C entsprechend einem $\varepsilon$ von 0,75. Dabei wurde im trockenen Abgas ein NOx-Gehalt < 10 ppm gemessen.

Bei Umschaltung auf Flammenbetrieb mit 70% Innenluft bei 110° C wurden dagegen 300 ppm NOx gefunden.

Es hat sich gezeigt, daß bei achsparalleler Brennstoffzufuhr, wie sie in Fig. 4 veranschaulicht ist, die Düse 39 nach dem Anfahren aus dem Verbrennungsraum 1 weiter zurückgezogen werden kann, ohne daß in der Oxidationszone 19 eine Flamme entsteht. Es sind deshalb auch Ausführungsformen denkbar, bei denen die Brennstoffdüse oder allgemein die Mündung der Brennstoffzuführeinrichtung längsverstellbar ausgebildet ist.

In den Fig. 6, 7 ist ein Industriebrenner in Form eines sogenannten Regeneratorbrenners veranschaulicht, der nach dem neuen Verfahren arbeitet. Mit der Vorrichtung nach den Fig. 2, 3 bzw. mit dem Rekuperatorbrenner nach den Fig. 4, 5, gleiche Teile sind mit gleichen Bezugszeichen versehen und nicht nochmals erörtert.

Der allgemein mit 60 bezeichnete Regeneratorbrenner ist wiederum in die Öffnung 34 einer Brenn- oder Ofenkammer 30 eingesetzt, in der der nicht weiter dargestellte Verbrennungsraum ausgebildet ist. Er weist einen koaxialen Luftleitzylinder 36 auf, in dem die koaxiale Brennstoffzuführleitung 41 und die in dieser verlaufende koaxiale Zündlanze 43 angeordnet sind. Der Luftleitzylinder 36 ist endseitig durch einen Deckel 61 verschlossen und mündet andererseits in die aus Keramik bestehende hochfeuerfeste topfartige Brennkammer 37, deren koaxiale Düse mit der Düsenöffnung 15 wiederum mit 39 bezeichnet ist. Dem Luftleitzylinder 36 sind sechs ihn umgebend angeordnete Regeneratorpatronen 63 zugeordnet, die in der Öffnung 34 der Ofenwand liegen. Jede der Regeneratorpatronen 63 besteht aus einer Anzahl strömungsmäßig hintereinander angeordneter übereinandergestapelter keramischer Speichersteine 64, die durchgehende Strömungskanäle enthalten. Solche Speichersteine sind bekannt, wozu beispielsweise auf "VDI-Wärmeatlas", vierte Auflage, 1984, Abschnitt N "Wärmeübertragung in Regeneratoren" hingewiesen werden kann. Jede der im Querschnitt teilkreisförmig mit einem dem Umfang des Luftleitzylinders 36 angepaßten Abschnitt 65 ausgebildeten Regeneratorpatronen 63 ist mit einem die Speichersteine 64 aufnehmenden, rohrförmig gestalteten Außenmantel 66 aus Stahlblech versehen, an den sich auf der dem Verbrennungsraum zugewandten Seite eine Düsenkammer 67 anschließt, in deren Bodenwand die Düsen 4 angeordnet sind.

Wie aus Fig. 7 zu ersehen, weist jede der Regeneratorpatronen 63 jeweils zwei Düsen 4 auf, wobei alle Düsen 4 mit ihren Achsen wiederum auf dem Kreis 5 (Fig. 3) liegen und benachbarte Düsen 4 einen gleichen Achsabstand A aufweisen. Der Achsabstand A benachbarter Düsen 4 ist mehr als doppelt so groß als der Düsenöffnungsdurchmesser d. Insgesamt sind bei sechs gleichmäßig verteilt angeordneten Regeneratorpatronen 63 zwölf kranzartig angeordnete Düsen 4 vorhanden.

Auf der den Düsen 4 gegenüberliegenden Seite ist der Innenraum des Außenmantels 66 der Regeneratorpatronen 63 an einen Luft-Verteilerblock 68 abgedichtet angeschlossen, der auf den Luftleitzylinder 36 koaxial aufgesetzt ist und das Kopfstück des Regeneratorbrenners 60 bildet. In dem Verteilerblock 68 sind Verteilerkanäle 69, 70, 71 ausgebildet, die an einen Ventilblock 72 angeschlossen sind, in den der Verbrennungsluftzufuhrstutzen 9 mündet und von dem der Verbrennungsabgasstutzen 12 abgeht.

Die Anordnung ist derart getroffen, daß der Luftleitkanal 69 mit dem Innenraum des Luftleitzylinders 36 und damit mit der Brennkammer 37 in Verbindung steht.

Der Verteilerkanal 70 und der Verteilerkanal 71 sind jeweils abwechselnd mit jeder zweiten Regeneratorpatrone 63a bzw. 63b (Fig. 7) verbunden, derart, daß die Regeneratorpatronen 63 in zwei Gruppen von je drei Regeneratorpatronen aufgeteilt sind. Der Ventilblock 72 gestattet es, die strömungsmäßig parallelgeschalteten drei Regeneratorpatronen 63a bzw. 63b jeder dieser beiden Gruppen abwechselnd mit kalter Verbrennungsluft oder mit heißen Verbrennungsabgasen aus dem Verbrennungsraum durchströmen zu lassen.

Die Betriebsweise dieses Regeneratorbrenners 60 ist grundsätzlich ähnlich jener des Rekuperatorbrenners nach den Fig. 4, 5:

Zum Anfahren aus dem kalten Zustand wird durch entsprechende Ansteuerung des Ventilblockes 72 zunächst über den Verteilerkanal 69 Verbrennungsluft in die Brennkammer 37 gefördert. Der in die Brennkammer 37 geförderte Brennstoff wird dort gezündet; er verbrennt in bekannter Weise mit Flammen. Der innenliegende Brenner mit der Brennkammer 37 arbeitet somit als ganz normaler herkömmlicher Gasbrenner. Die erzeugten Verbrennungsabgase strömen durch die Düsen 4 einer der beiden Regeneratorpatronengruppen 63a, 63b und den zugeordneten Verteilerkanal 70 bzw. 71 in den Abgasstutzen 12. Die Düsen 4 der Regeneratorpatronen 63b bzw. 63a der anderen Gruppe sind noch nicht oder nur in stark gedrosseltem Maße mit Verbrennungsluft beaufschlagt.

Sowie die für einen stabilen flammenlosen Betrieb erforderliche Temperaturerhöhung erreicht ist, werden die Ventile des Ventilblocks 72 derart umgeschaltet, daß die Luftversorgung der Brennkammer 37 abgesperrt oder gedrosselt wird, während gleichzeitig die kranzartig angeordneten Düsen 4 der jeweils luftführenden Regeneratorpatronen der Gruppe 63a bzw. 63b mit der Nennverbrennungsluftmenge versorgt werden. Das Brennstoffventil 42 wird entsprechend eingeregelt, so daß sich in der sich in dem Verbrennungsraum ausbildenden Oxidationszone wiederum eine im wesentlichen flammenlose pulsationsfreie Oxidation des Brennstoffs einstellt.

Die drei Regeneratorpatronen 63a bzw. 63b der beiden Gruppen werden abwechselnd von heißen Verbrennungsabgasen und von kalter Verbrennungsluft axial durchströmt, wie dies in Fig. 7 dadurch veranschaulicht ist, daß die Düsenöffnungen 4 einer Gruppe (der luftführenden) schraffiert dargestellt sind.

Der beschriebene Regeneratorbrenner erlaubt es, mit sehr hoher Luftvorwärmung zu arbeiten, wobei ein Luftvorwärmgrad von $\varepsilon \geqq 0{,}9$ zu erreichen ist.

Er kann in der erläuterten Bauart im übrigen auch mit Verbrennung des Brennstoffs in Flammen betrieben werden. Dabei kann eine zweistufige Verbrennung benutzt werden, wie sie beispielsweise in der DE-PS 34 22 229 erläutert ist.

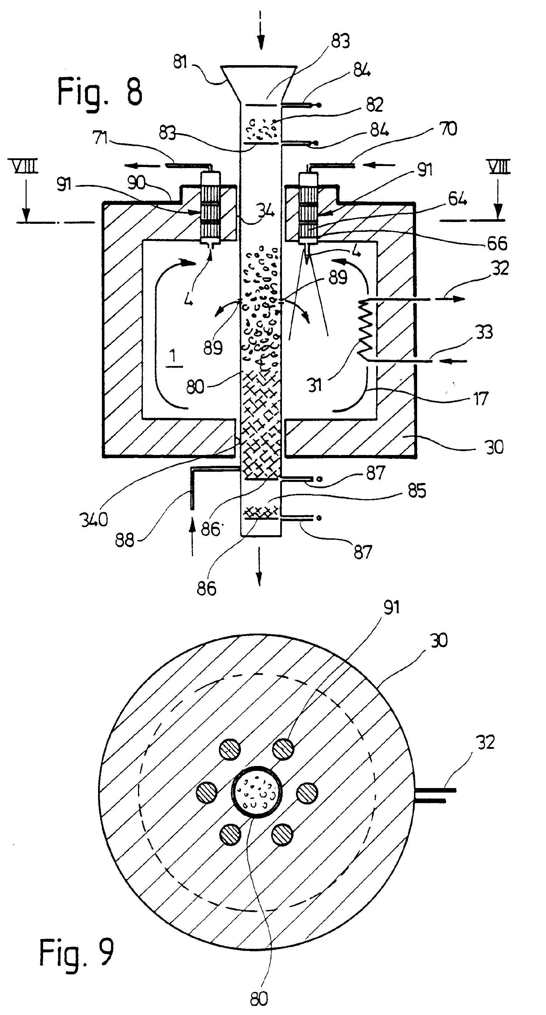

Das neue Verfahren der im wesentlichen flammenlosen und pulsationsfreien Oxidation eines Brennstoffes läßt sich auch für feste Brennmaterialien (Kohle, Abfall, Müll etc.) anwenden, wie dies anhand der Fig. 8, 9 im folgenden kurz erläutert wird.

Die in diesen Figuren schematisch dargestellte Vorrichtung verwendet ähnliche Elemente, wie sie bereits anhand der vorbeschriebenen Ausführungsbeispiele erläutert wurden. Insoweit sind wiederum gleiche Teile mit gleichen Bezugszeichen versehen und nicht weiter erläutert.

Der Verbrennungsraum 1 der Vorrichtung ist in einer Ofen- oder Brennkammer 30 enthalten, in der zur Nutzwärmeauskopplung die von einem Wärmeträgermittel durchströmte Rohrschlange 31 angeordnet ist, die in Fig. 8 jedoch lediglich schematisch angedeutet ist. Ihre praktische Ausbildung ist aus Fig. 4 zu ersehen; sie ist koaxial zu dem im wesentlichen zylindrischen Verbrennungsraum 1 ausgebildet.

Zusätzlich zu der Öffnung 34 ist in der Wandung der Ofen- oder Brennkammer 30 eine gegenüberliegende koaxiale zweite Öffnung 340 vorhanden. Beide Öffnungen 34, 340 nehmen ein durchgehendes Rohr 80 auf, das gegen die Kammerwandung abgedichtet ist. Das normalerweise mit vertikaler Betriebslage angeordnete Rohr 80 trägt oben einen Einfülltrichter 81, an den sich eine Einlaßschleuse 82 mit zwei abgedichteten Schleusentüren 83 anschließt, die über Anschlußstutzen 84 mit Luft gespült werden kann.

Eine ähnliche Schleuse 85 ist an dem gegenüberliegenden unteren Ende des Rohres 80 vorgesehen; ihre Schleusentüren sind mit 86 bezeichnet; über die Anschlußstutzen 87 kann der Schleusenraum mit Luft gespült werden. Oberhalb der unteren Schleuse 85 mündet eine Leitung 88 in das Rohr 80, über die ein Oxidationsmittel, beispielsweise Luft oder Wasserdampf, in das Rohr 80 eingeführt werden kann.

In dem durch den Verbrennungsraum 1 verlaufenden Teil seines Mantels ist das Rohr 80 mit Gasaustrittsöffnungen 89 versehen, deren Abstand von der oberen Kammerinnenwand zweckentsprechend gewählt ist und die die Brennstoffzuführeinrichtung für die im wesentlichen flammenlose Oxidation bilden.

Seitlich neben dem Rohr 80 und dieses kranzartig umgebend sind in die obere Kammerwand 90 sechs Regeneratoren 91 eingesetzt, deren grundsätzlicher Aufbau jeweils jenen einer der Regeneratorpatronen 63 der Fig. 6, 7 entspricht.

Jeder der Regeneratoren 91 enthält demgemäß eine Anzahl übereinander gestapelter Speichersteine 64, die in einem in diesem Falle zylindrischen Außenmantel 66 aus Blech angeordnet sind, der auf seiner dem Verbrennungsraum 1 zugewandten Stirnseite bis auf eine oder mehrere Düsen 4 verschlossen ist. Auf der gegenüberliegenden Seite ist der Außenmantel 66 unter Ausbildung eines Gas- oder Luftverteilungsraumes verschlossen, der an einen Verteilerkanal 70 oder 71 angeschlossen ist, welcher seinerseits wiederum zu einem nicht weiter dargestellten Ventilblock führt, der entsprechend dem Ventilblock 72 nach Fig. 6 aufgebaut ist.

Die Regeneratoren 91 sind wiederum in zwei Gruppen abwechselnd zueinander angeordneter Regeneratoren unterteilt; die Regeneratoren 91 jeder der beiden Gruppen werden abwechselnd von aus dem Verbrennungsraum 1 abströmenden heißen Verbrennungsabgasen und von von außen zugeführter kalter Verbrennungsluft durchströmt, so daß die von den heißen Verbrennungsabgasen an die Speichersteine 64 abgegebene Wärme von der sodann durchströmenden kalten Verbrennungsluft aufgenommen und zu deren Vorwärmung ausgenutzt wird.

Die Düsen 4 sind kranzartig rings um das achsparallele Rohr 80 angeordnet; der Achsabstand A benachbarter Düsen 4 ist wiederum größer als der doppelte Düsenöffnungsdurchmesser d.

Im Betrieb wird über den Einfülltrichter 81 festes stückiges Brennmaterial in das Rohr 80 portionsweise über die Schleuse 82 eingebracht. Über die Leitung 88 wird das Oxidationsmittel eingeleitet, durch das nach entsprechender Zündung das Brennmaterial teiloxidiert wird. Dabei findet eine thermische Zersetzung des Brennmaterials statt, als deren Ergebnis brennbare Gase durch die Öffnungen 89 teilweise oder vollständig in den Verbrennungsraum 1 einströmen. Aus den Öffnungen der Düsen 4 der jeweils mit Luft beaufschlagten Gruppe der Regeneratoren 91 strömt vorgewärmte Verbrennungsluft in Strahlen aus, die sich mit in dem Verbrennungsraum 1 durch Injektorwirkung angesaugten rezirkulierenden Verbrennungsabgasen in bereits anhand der Fig. 2, 3 geschilderter Weise umhüllen und mischen, so daß ein Verbrennungsabgas-/-Luftgemisch entsteht, das mindestens auf Zündtemperatur gehalten wird.

Die Gasaustrittsöffnungen 89 in dem Rohr 80 sind derart angeordnet, daß die austretenden brennbaren Gase am Ende der Mischstrecke mit dem Verbrennungsabgas-/-Luftgemisch zusammenkommen und sich eine das Rohr 80 umgebende ringförmige Oxidationszone ausbildet, in der die im wesentlichen flammenlose und pulsationsfreie Oxidation der Gase stattfindet.

Die in dem Rohr 80 verbleibenden festen Verbrennungsrückstände werden bedarfsgemäß durch die untere Aschenschleuse 85 abgeführt, so daß sich insgesamt ein kontinuierlicher Verbrennungsbetrieb ergibt. Diese, hier lediglich in ihrem schematischen Aufbau geschilderte Vorrichtung eignet sich deshalb auch besonders zur Müll- und Abfallverbrennung.

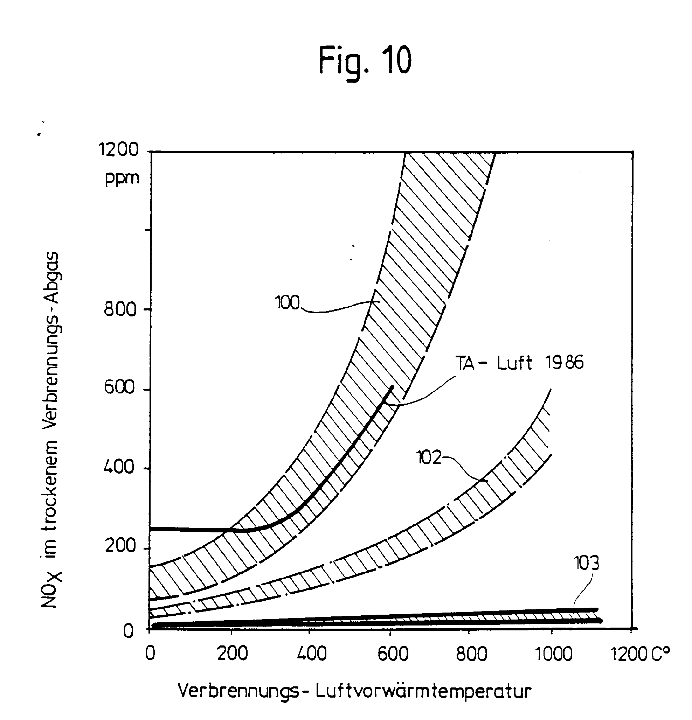

Die in verschiedenen Ausführungsformen im Zusammenhang mit den Fig. 2 bis 9 beschriebenen Vorrichtungen zur Durchführung des im wesentlichen flammenlosen und pulsationsfreien Oxidationsverfahrens zeichnen sich dadurch aus, daß bei hoher Verbrennungsluftvorwärmung und damit hervorragender Ausnutzung der Brennstoffenergie die Stickoxidemissionen auf ein praktisch vernachlässigbares Minimum reduziert sind. Dies ist augenfällig aus dem Diagramm nach Fig. 10 zu entnehmen, in dem in Abhängigkeit von der Verbrennungsluftvorwärmtemperatur der NOx-Anteil in dem trockenen Verbrennungsabgas, wie es in die Atmosphäre abgegeben wird, für nach verschiedenen Verfahren arbeitende Brenner veranschaulicht ist.

Das schraffiert dargestellte Gebiet 100 veranschaulicht die NOx-Emission bei einem normalen Industriebrenner, der mit Oxidation des Brennstoffes in Flammen ohne zusätzliche Maßnahmen zur NOx-Minderung arbeitet. Der NOx-Anteil in dem trockenen Verbrennungsabgas steigt mit zunehmender Luftvorwärmtemperatur steil an, so daß solche Brenner den heute geltenden gesetzlichen Bestimmungen (TA-Luft 1986) durchweg nicht mehr entsprechen. Der durch die TA-Luft 1986 vorgegebene Grenzwertverlauf ist zum Vergleich eingetragen.

Wesentlich günstigere Verhältnisse hinsichtlich der NOx-Emission ergeben sich für Rekuperatorbrenner, die mit zweistufiger Verbrennung arbeiten, wie sie beispielsweise in der D E-PS 34 22 229 beschrieben sind. Wie der zugeordnete, ebenfalls gestrichelt dargestellte Bereich 102 zeigt, muß mit zunehmender Verbrennungsluftvorwärmtemperatur aber auch bei diesen Brennern ein nicht unerheblicher Anstieg des NOx-Anteils in dem trockenen Verbrennungsabgas in Kauf genommen werden.

Demgegenüber zeigt das Gebiet 103, das die Verhältnisse bei einem nach dem neuen Verfahren arbeitenden Rekuperator oder Regeneratorbrenner entsprechend Fig. 4 bzw. Fig. 6 veranschaulicht, daß der fast verschwindende NOx-Anteil in dem trockenen Verbrennungsabgas sich mit zunehmender Verbrennungsluftvorwärmtemperatur nur unbedeutend erhöht und deshalb insgesamt vernachlässigbar ist. Daraus ergibt sich, daß bei diesem Verfahren mit praktisch beliebig hoher Luftvorwärmung gearbeitet werden kann, ohne daß eine unzulässig hohe NOx-Bildung zu erwarten wäre.

Zur Erniedrigung der erforderlichen Zündtemperatur kann in dem Verbrennungsraum 1 ein Katalysator, beispielsweise aus Eisenoxid, angeordnet sein. Es ist auch denkbar, dem Brennstoff und/oder der Verbrennungsluft feinverteiltes Katalysatormaterial zuzusetzen.

Bei kleinvolumigen Verbrennungsräumen kann es notwendig werden, das aus dem Verbrennungsraum 1 abströmende Verbrennungsabgas über einen Katalysator (beispielsweise Fe) zu leiten, der etwa verbleibende CO-Anteil oxidiert.

Das neue Verfahren hat den Vorteil, daß es mit hoher Luftvorwärmung arbeiten kann. In speziellen Einzelfällen kann es aber auch mit verhältnismäßig geringer Luftvorwärmung durchgeführt werden, beispielsweise wenn mit stark verschmutzten Verbrennungsabgasen zu rechnen ist.

Außerdem sind Fälle denkbar, bei denen der Brennstoff vorgewärmt wird, wozu ebenfalls Verbrennungsabgaswärme verwendet werden kann.

Die Ausführungsbeispiele nach den Fig. 4, 5 und 6, 7 betreffen Brenner zur direkten Beheizung einer Ofen- oder Brennkammer 20 bzw. 30. Das neue Verfahren kann aber auch zum Betrieb von Strahlrohren angewandt werden, bei denen eine Abgasrezirkulation möglich ist, z.B. bei Mantel- und P-Strahlrohren. Der Verbrennungsraum liegt dabei in dem Strahlrohr.

## Patentansprüche

1. Verfahren zum Verbrennen von Brennstoff in einem Verbrennungsraum, bei dem Brennstoff mit vorgewärmter Verbrennungsluflt in Gegenwart von zurückgeführten Verbrennungsabgasen oxidiert wird und bei dem

   Verbrennungsabgase, denen vorher aus dem System nach außen abgeführte Nutzwärme entzogen wurde, mit der vorgewärmten Verbrennungsluft in einem Verbrennungsabgasrückführverhältnis $r \geqq 2$ durch interne Rezirkulation in dem Verbrennungsraum vermischt werden (wobei das Verbrennungsabgasrückführungsverhältnis als Verhältnis der Massenströme der rückgeführten Verbrennungsabgase und der Verbrennungsluft definiert ist), wobei durch die Luftvorwärmung und die Verbrennungsabgastemperatur dieses Verbrennungsabgas-/-Luftgemisch auf einer Temperatur gehalten wird, die höher liegt als die Zündtemperatur des Brennstoffs und bei dem

   das Verbrennungsabgas-/-Luftgemisch sodann in dem Verbrennungsraum mit dem Brennstoff unter Ausbildung einer Oxidationszone zusammengebracht wird, in der eine im wesentlichen flammenlose und pulsationsfreie Oxidation stattfindet.

2. Verfahren nach Anspruch 1, dadurch gekennzeichnet, daß die Luftstrahlen kranzförmig angeordnet sind und die Brennstoffzufuhr in dem von den Luftstrahlen umschlossenen Bereich in einem vorbestimmten Abstand hinter den Düsenöffnungen erfolgt.

3. Verfahren nach Anspruch 2, dadurch gekennzeichnet, daß der Mindestachsabstand (A) benachbarter Düsenöffnungen größer ist als der doppelte Düsenöffnungsdurchmesser (d).

4. Verfahren nach Anspruch 2 oder 3, dadurch gekennzeichnet, daß die Strömungsgeschwindigkeit der Verbrennungsluft beim Austritt aus den Düsenöffnungen mindestens 20m/sec beträgt.

5. Verfahren nach einem der vorhergehenden Ansprüche, dadurch gekennzeichnet, daß die Verbrennungsluft mit einem Luftvorwärmungsgrad $\varepsilon > 0,6$ vorgewärmt wird.

6. Verfahren nach Anspruch 1, dadurch gekennzeichnet, daß zur Luftvorwärmung Verbrennungsabgase verwendet werden, denen vorher Nutzwärme entzogen wurde.

7. Verfahren nach einem der vorhergehenden Ansprüche, dadurch gekennzeichnet, daß das Verbrennungsabgas-/-Luftgemisch im Anfahrbetrieb durch Zufuhr von Fremdwärme zumindest in der Oxidationszone auf Zündtemperatur gehalten wird.

8. Verfahren nach einem der vorhergehenden Ansprüche, dadurch gekennzeichnet, daß in der Oxidationszone die Zündtemperatur katalytisch herabgesetzt wird.

9. Verfahren nach einem der vorhergehenden Ansprüche, dadurch gekennzeichnet, daß beim Anfahren aus dem kalten Zustand in dem Verbrennungsraum zunächst Brennstoff unter entsprechendem Luftüberschuß mit stabiler Flamme verbrannt wird, bis das Verbrennungsabgas-/Luftgemisch mindestens auf Zündtemperatur gebracht werden kann und daß sodann durch entsprechende Veränderung der Verbrennungsluft- und/oder der Brennstoffzufuhr die Reaktionsbedingungen in der Oxidationzone auf die im wesentlichen flammenlose und pulsationsfreie Oxidation übergeleitet werden.

10. Verfahren nach Anspruch 9, dadurch gekennzeichnet, daß beim Anfahren die Lichtemission der Flamme im UV-Bereich und nach dem Einsetzen der im wesentlichen flammenlosen und pulsationsfreien Oxidation das Verschwinden dieser Lichtemission im UV-Bereich überwacht werden.

11. Verfahren nach einem der vorhergehenden Ansprüche, dadurch gekennzeichnet, daß zur Überwachung der im wesentlichen flammenlosen und pulsationsfreien Oxidation die strömungsabwärts hinter der Oxidationszone gemessene Temperaturerhöhung in dem Verbrennungsraum benutzt wird.

12. Verfahren nach einem der vorhergehenden Ansprüche, dadurch gekennzeichnet, daß in dem Verbrennungsraum festes oder flüssiges Brennmaterial thermisch zersetzt (vergast) wird und daß das dabei frei werdende brennbare Gas unmittelbar als Brennstoff im wesentlichen flammenlos und pulsationsfrei in der Oxidationszone oxidiert wird.

13. Vorrichtung zur Durchführung des Verfahrens nach einem der vorhergehenden Ansprüche,
mit einer durch Injektorwirkung Verbrennungsabgase zurücksaugenden Düseneinrichtung (4) für Verbrennungsluft,
mit Luftleitmitteln (6,7) zum Zuführen von Verbrennungsluft zu der Düseneinrichtung,
mit einer Brennstoffzuführeinrichtung (13,14) und
mit einer Einrichtung (8) zur Vorwärmung der Verbrennungsluft,
bei der die Düseneinrichtung für eine Rücksaugung von Verbrennungsabgasen aus dem Verbrennungsraum (1) mit einem Verbrennungsabgasrückführverhältnis $r \geqq 2$ ausgelegt und mit der gesamten Verbrennungsluft beaufschlagt ist,
bei der Mittel (18) vorgesehen sind, um die aus der Düseneinrichtung austretende vorgewärmte Verbrennungsluft mit den in dem Verbrennungsraum teilweise abgekühlten rückgesaugten Verbrennungsabgasen zu einem Gemisch mit einer resultierenden Temperatur zu vermischen, die mindestens gleich der Zündtemperatur des Brennstoffes ist,
bei der die Brennstoffzuführeinrichtung Mittel (15) zum Einbringen des Brennstoffs in das Verbrennungsabgas-/-Luftgemisch in einer Oxidationszone (19) in dem Verbrennungsraum (1) aufweist, welche sich in den Verbrennungsraum im Zusammenwirken mit der Düseneinrichtung unter den Bedingungen einer im wesentlichen flammenlosen und pulsationsfreien Oxidation ausbildet.

14. Vorrichtung nach Anspruch 13, dadurch gekennzeichnet, daß die Düseneinrichtung eine Anzahl kranzförmig angeordneter Düsen (4) aufweist und daß die Brennstoffzuführeinrichtung innerhalb des von den Düsen (4) gebildeten Kranzes mündend (bei 15) ausgebildet ist.

15. Vorrichtung nach Anspruch 14, dadurch gekennzeichnet, daß der Mindestachsabstand (A) benachbarter Düsenöffnungen größer als der doppelte Düsenöffnungsdurchmesser (d) ist.

16. Vorrichtung nach Anspruch 14 oder 15, dadurch gekennzeichnet, daß der in Strömungsrichtung gemessene Abstand zwischen der Düsenöffnungsberandung und dem Bereich, in dem der aus der Brennstoffzuführeinrichtung austretende flüssige oder gasförmige Brennstoff mit dem Gemisch gemischt wird, größer als dem Sechsfachen des Düsenöffnungsdurchmessers (d) ist.

17. Vorrichtung nach einem der Ansprüche 14 bis 16, dadurch gekennzeichnet, daß die Austrittsgeschwindigkeit der Verbrennungsluft aus den Düsen (4) mindestens 20 m/sec beträgt.

18. Vorrichtung nach Anspruch 16 oder 17, dadurch gekennzeichnet, daß die mit gasförmigem oder fein verteiltem oder verdampftem flüssigem Brennstoff arbeitende Brennstoffzuführeinrichtung eine Brennstoffauslaßdüse (15) aufweist, die in einem vorbestimmten Abstand strömungsabwärts hinter den Verbrennungsluft- Düsen (4) mündet.

19. Vorrichtung nach Anspruch 18, dadurch gekennzeichnet, daß der Abstand zwischen der Brennstoffdüse (15) und den Verbrennungsluft-Düsen (4) verstellbar ist.

20. Vorrichtung nach einem der Ansprüche 13 bis 19, dadurch gekennzeichnet, daß die Luftzuführeinrichtung und/oder die Düseneinrichtung (4) und/oder die Brennstoffzuführeinrichtung zwischen zwei verschiedenen Betriebszuständen umsteuerbar oder umschaltbar ausgebildet sind, von denen in einem der Brennstoff mit Luftüberschuß unter Flammenbildung verbrannt und in dem anderen der Brennstoff im wesentlichen flammenlos und pulsationsfrei oxidiert wird.

21. Vorrichtung nach Anspruch 20, dadurch gekennzeichnet, daß sie eine in dem von den Düsen (4) gebildeten Kranz mündende Brennkammer (37) aufweist, in der die Brennstoffzuführeinrichtung (41) mündet und die Verbrennungslufteinlässe (40) aufweist, und daß den Verbrennungslufteinlässen (40) und den Düsen (4) Luftsteuermittel (72) zugeordnet sind, durch die der Verbrennungsluftdurchsatz durch die Verbrennungslufteinlässe (40) und die Düsen (4) wahlweise steuerbar ist.

22. Vorrichtung nach einem der Ansprüche 13 bis 21, dadurch gekennzeichnet, daß sie mit einem den Düsen (4) vorgeschalteten Rekuperator (47, 48) ausgebildet ist, der von der Verbrennungsluft und von Verbrennungsabgasen durchströmt ist, denen im Verbrennungsraum (1) Nutzwärme entzogen wurde.

23. Vorrichtung insbesondere nach einem der Ansprüche 14 bis 21, dadurch gekennzeichnet, daß sie als Regeneratorbrenner (60) mit zumindest zwei abwechselnd von Verbrennungsluft und von durch Nutzwärmeentzug abgekühlten Verbrennungsabgasen durchströmten Regeneratoreinheiten (63) ausgebildet ist, denen Umschalteinrichtungen (72) für die Verbrennungsluft und die Verbrennungsabgase zugeordnet isnd.

24. Vorrichtung nach Anspruch 23, dadurch gekennzeichnet, daß die Regeneratoreinheiten (63) unter Ausbildung einer Baueinheit die Brennstoffzuführeinrichtung (41) umgebend angeordnet sind.

25. Vorrichtung nach Anspruch 24, dadurch gekennzeichnet, daß die Regeneratoreinheiten (63) jeweils patronenartig mit wenigstens einer auf der dem Verbrennungsraum (1) zugewandten Stirnseite angeordneten Verbrennungsluft-Düse (4) ausgebildet sind.

26. Vorrichtung nach einem der Ansprüche 13 bis 15, dadurch gekennzeichnet, daß die Brennstoffzuführeinrichtung eine in dem Verbrennungsraum (1) angeordnete beheizte Kammer (80) insbesondere für feste, thermisch zersetzbare oder vergasbare Brennmaterialien aufweist, die mit wenigstens einem in den Verbrennungsraum (1) mündenden Auslaß (89) für bei der Vergasung entstehenden gasförmigen Brennstoff versehen ist und deren Brennstoffauslaß (89) innerhalb des von den Verbrennungsluft-Düsen (4) gebildeten Kranzes mündet.

27. Vorrichtung nach Anspruch 26, dadurch gekennzeichnet, daß die Kammer (80) im Durchlaufbetrieb mit Brennmaterialien beschickbar ausgebildet ist.

28. Vorrichtung nach Anspruch 27, dadurch gekennzeichnet, daß die Kammer ein beidseitig abschließbares Rohr (80) aufweist, das mit wenigstens einem Brennstoffauslaß (89) versehen ist und das durch den Verbrennungsraum (1) verlaufend und gegenüber diesem abgedichtet angeordnet ist.

29. Vorrichtung nach Anspruch 28, dadurch gekennzeichnet, daß das Rohr (80) beidseitig durch Verschlußeinrichtungen (82, 85) verschließbar ist und einen Oxidationsmitteleinlaß (88) aufweist.

30. Vorrichtung nach Anspruch 28 oder 29, dadurch gekennzeichnet, daß das Rohr (80) einenends eine Brennmaterialeinfülleinrichtung (81, 82) und anderenends eine Abführeinrichtung- (85) für Verbrennungsrückstände aufweist.

## Claims

1. A method for combusting fuel in a combustion chamber, wherein fuel is oxidised with preheated combustion air in the presence of recirculated exhaust gases and wherein

   exhaust gases, from which useful heat discharged to the outside of the system has been previously removed, are mixed with the preheated combustion air with an exhaust gas recirculation ratio of $r \geqq 2$ by internal recirculation in the combustion chamber (the exhaust gas recirculation ratio being defined as the ratio between the flow rates of the recirculated exhaust gases and the combustion air), wherein

   as a result of the preheating of the air and the exhaust gas temperature, this mixture of exhaust gas and combustion air is kept at a temperature, which is higher than the ignition temperature of the fuel, and wherein

   the mixture of exhaust gas and combustion air is then brought together in the combustion chamber with the fuel, forming an oxidation zone in which a substantially flameless and pulse-free oxidation takes place.

2. Method according to Claim 1, characterised in that the streams of air are arranged in a ring, and the delivery of fuel in the region enveloped by the streams of air takes place at a predetermined distance downstream of the nozzle openings.

3. Method according to Claim 2, characterised in that the minimum axial spacing (A) between adjacent nozzle openings is greater than twice the diameter (d) of the nozzle openings.

4. Method according to Claim 2 or 3, characterised in that the flow velocity of the combustion air discharging from the nozzle openings is at least 20 m/sec.

5. Method according to one of the preceding claims, characterised in that the combustion air is preheated with a degree of air preheating of $\varepsilon > 0.6$.

6. Method according to Claim 1, characterised in that exhaust gases, from which useful heat has been previously removed, are used to preheat the air.

7. Method according to one of the preceding claims, characterised in that during start-up operation, the mixture of exhaust gas and combustion air is kept at ignition temperature at least in the oxidation zone by supplying external heat.

8. Method according to one of the preceding claims, characterised in that the ignition temperature is reduced catalytically in the oxidation zone.

9. Method according to one of the preceding claims, characterised in that in the case of start-up from cold, fuel is firstly combusted with a stable flame in the combustion chamber with an appropriate excess of air until the mixture of exhaust gas and combustion air can be brought at least to ignition temperature; and that by appropriately changing the supply of combustion air and/or fuel, the reaction conditions in the oxidation zone are then changed over to support the substantially flameless and pulse-free oxidation.

10. Method according to Claim 9, characterised in that the light emission from the flame in the uv range is monitored during start-up and the absence of this light emission in the uv range is monitored after commencement of the substantially flameless and pulse-free oxidation.

11. Method according to one of the preceding claims, characterised in that the increase in temperature in the combustion chamber measured downstream of the oxidation zone is used to monitor the substantially flameless and pulse-free oxidation.

12. Method according to one of the preceding claims, characterised in that solid or liquid fuel material is thermally decomposed (gasified) in the combustion chamber, and that the combustible gas released thereby is oxidised directly as fuel in the substantially flameless and pulse-free process in the oxidation zone.

13. An apparatus for conducting the method according to one of the preceding claims,
with a nozzle arrangement (4) for combustion air, which re-aspirates exhaust gases by injector action,
with air guide means (6, 7) for the supply of combustion air to the nozzle arrangement,
with a fuel delivery means (13, 14) and
with a means (8) for preheating the combustion air,
wherein the nozzle arrangement for re-aspiration of exhaust gases from the combustion chamber (1) has an exhaust gas recirculation ratio of $r \geqq 2$ and is subjected to the full load of combustion air,
wherein means (18) are provided for mixing the preheated combustion air discharging from the nozzle arrangement with the re-aspirated exhaust gases, which have been partially cooled in the combustion chamber, to form a mixture at a resultant temperature, which is at least equal to the ignition temperature of the fuel,
wherein the fuel delivery means has means (15) for delivering the fuel into the mixture of exhaust gas and combustion air in an oxidation zone (19) in the combustion chamber (1), which is formed in the combustion chamber in cooperation with the nozzle arrangement under the conditions of a substantially flameless and pulse-free oxidation.

14. Apparatus according to Claim 13, characterised in that the nozzle arrangement has a number of nozzles (4) arranged in a ring, and that the fuel delivery means is constructed to discharge (at 15) inside the ring formed by the nozzles (4).

14

15. Apparatus according to Claim 14, characterised in that the minimum axial spacing (A) between adjacent nozzle openings is greater than double the diameter (d) of the nozzle openings.

16. Apparatus according to Claim 14 or 15, characterised in that the spacing measured in flow direction between the periphery of the nozzle opening and the region in which the liquid or gaseous fuel discharging from the fuel delivery means is mixed with the mixture is greater than six-times the diameter (d) of the nozzle openings.

17. Apparatus according to one of Claims 14 to 16, characterised in that the exit speed of the combustion air from the nozzles (4) amounts to at least 20 m/sec.

18. Apparatus according to Claim 16 or 17, characterised in that the fuel delivery means operating with gaseous or finely dispersed or evaporated liquid fuel has a fuel outlet nozzle (15), which discharges at a predetermined distance downstream of the combustion air nozzles (4).

19. Apparatus according to Claim 18, characterised in that the distance between the fuel nozzle (15) and the combustion air nozzles (4) is adjustable.

20. Apparatus according to one of Claims 13 to 19, characterised in that the air delivery means and/or the fuel delivery means are constructed so that they may be regulated or switched between two different operating modes, in one of which the fuel is combusted with an excess of air to form flames and in the other of which the fuel undergoes substantially flameless and pulse-free oxidation.

21. Apparatus according to Claim 20, characterised in that it has a combustion chamber (37) discharging in the ring formed by the nozzles (4), into said combustion chamber the fuel discharge device (41) discharges and which has combustion air inlets (40); and that air control means (72) are allocated to the combustion air inlets (40) and the nozzles (4) to enable selective control of the combustion air throughput through the combustion air inlets (40) and the nozzles (4).

22. Apparatus according to one of Claims 13 to 21, characterised in that it is provided with a recuperator (47, 48) upstream of the nozzles (4), through which combustion air and exhaust gases flow, from which useful heat has been removed in the combustion chamber (1).

23. Apparatus in particular according to one of Claims 14 to 21, characterised in that it is constructed as a regenerator burner (60) with at least two regenerator units (63), through which flow combustion air and exhaust gases cooled by the removal of useful heat, and which have switchover devices (72) allocated to them for the combustion air and the exhaust gases.

24. Apparatus according to Claim 23, characterised in that the regenerator units (63) are arranged to surround the fuel delivery means (41) to form a structural unit.

25. Apparatus according to Claim 24, characterised in that the regenerator units (63) are each constructed in the form of cartridges with at least one combustion air nozzle (4) disposed on the face end facing the combustion chamber (1).

26. Apparatus according to one of Claims 13 to 15, characterised in that the fuel delivery means has a heated chamber (80) disposed in the combustion chamber(1) provided in particular for solid, thermally decomposable or gasifiable fuel materials, said chamber (80) being provided with at least one outlet (89) discharging into the combustion chamber (1) for the gaseous fuel produced during gasification, its fuel outlet (89) discharging inside the ring formed by the combustion air nozzles (4).

27. Apparatus according to Claim 26, characterised in that the chamber (80) is constructed so that it may be charged with fuel materials in a continuous operation.

28. Apparatus according to Claim 27, characterised in that the chamber has a tube (80), which may be closed at both ends, is provided with at least one fuel outlet (89) and is disposed to extend through the combustion chamber (1) and is sealed off therefrom.

29. Apparatus according to Claim 28, characterised in that the tube (80) may be closed at both ends by stopper devices (82, 85) and has an oxidising agent inlet (88).

30. Apparatus according to Claim 28 or 29, characterised in that the tube (80) has a means (81, 82) for filling it with fuel material at one end and a removal device (85) for disposing of combustion residues at the other end.

## Revendications

1. Procédé pour la combustion de combustible dans une chambre de combustion, suivant lequel le combustible est oxydé avec de l'air de combustion préchauffé, en présence de gaz d'échappement recyclés, et suivant lequel des gaz d'échappement auxquels de la chaleur utile évacuée hors du système a été préalablement soutirée, sont mélangés avec l'air de combustion préchauffé dans un rapport de recyclage de gaz d'échappement $r \geqq 2$, par recirculation interne dans la chambre de combustion (le rapport de recyclage de gaz d'échappement étant défini comme étant le rapport des flux massiques des gaz d'échappement recyclé et de l'air de combustion), ce mélange gaz d'échappement/air de combustion étant, par le préchauffage de l'air et par la température des gaz d'échappement, maintenu à une température qui est supérieure à la température d'allumage du combustible, et suivant lequel le mélange gaz d'échappement/air de combustion est ensuite, dans la chambre de combustion, amené en contact avec le combustible, avec formation d'une zone d'oxydation dans laquelle a lieu une oxydation essentiellement sans flamme et exempte de pulsation.

2. Procédé suivant la revendication 1, caractérisé par le fait que les jets d'air sont disposés en couronne et que l'arrivée de combustible a lieu dans la zone entourée par les jets d'air à une distance prédéterminée en aval des orifices d'injection.

3. Procédé suivant la revendication 2, caractérisé par le fait que l'entraxe minimal (A) entre les orifices d'injection voisins est supérieur à deux fois le diamètre (d) des orifices d'injection.

4. Procédé suivant la revendication 2 ou 3, caractérisé par le fait que la vitesse d'écoulement de l'air de combustion à la sortie des orifices d'injection s'élève à au moins 20 m/sec.

5. Procédé suivant l'une des revendications précédentes, caractérisé par le fait que l'air de combustion est préchauffé avec un degré de préchauffage d'air $\varepsilon > 0{,}6$.

6. Procédé suivant la revendication 1, caractérisé par le fait qu'on utilise, pour le préchauffage de l'air, des gaz d'échappement auxquels de la chaleur utile a été soutirée préalablement.

7. Procédé suivant l'une des revendications précédentes, caractérisé par le fait que le mélange gaz d'échappement/air de combustion est maintenu, pendant le régime de démarrage, par apport de chaleur étrangère au moins dans la zone d'oxydation à la température d'allumage.

8. Procédé suivant l'une des revendications précédentes, caractérisé par le fait que dans la zone d'oxydation, la température d'allumage est réduite par voie catalytique.

9. Procédé suivant l'une des revendications précédentes, caractérisé par le fait que lors du démarrage à partir de l'état froid, du combustible est d'abord brûlé dans la chambre de combustion avec excès d'air et avec flamme stable, jusqu'à ce que le mélange gaz d'échappement/air de combustion puisse être amené au moins à la température d'allumage et qu'ensuite, par modification appropriée de l'amenée d'air de combustion ou de l'amenée de combustible, les conditions de réaction dans la zone d'oxydation sont modifiées pour passer à une oxydation essentiellement sans flamme et exempte de pulsation.

10. Procédé suivant revendication 9, caractérisé par le fait que lors du démarrage, l'émission de lumière de la flamme est surveillée dans la zone UV et après l'établissement de l'oxydation essentiellement sans flamme et exempte de pulsation, la disparition de cette émission de lumière est surveillée dans la zone UV.

11. Procédé suivant l'une des revendications précédentes, caractérisé par le fait qu'en vue de la surveillance de l'oxydation essentiellement sans flamme et exempte de pulsation, l'augmentation de température mesurée en aval de la zone d'oxydation dans la chambre de combustion est utilisée.

12. Procédé suivant l'une des revendications précédentes, caractérisé par le fait qu'un matériau combustible solide ou liquide est thermiquement décomposé (gazéifié) dans la chambre de combustion et que le gaz inflammable ainsi libéré est oxydé directement comme combustible de façon, essentiellement sans flamme et exempte de pulsation, dans la zone d'oxydation.

13. Dispositif pour la mise en oeuvre du procédé suivant l'une des revendications précédentes, comprenant :
    un dispositif d'injection (4) pour de l'air de combustion, réaspirant par effet d'injecteur des gaz d'échappement,
    des moyens de guidage d'air (6, 7) pour amener de l'air de combustion au dispositif d'injection,
    un dispositif d'amenée de combustible (13, 14), et
    un dispositif (8) pour le préchauffage de l'air de combustion,
    dans lequel le dispositif d'injection est conçu pour une réaspiration de gaz d'échappement à partir de la chambre de combustion (1) avec un rapport de recyclage de gaz d'échappement $r \geqq 2$ et est alimenté avec la totalité de l'air de combustion,
    des moyens (18) sont prévus pour mélanger l'air de combustion préchauffé sortant du dispositif d'injection avec les gaz d'échappement réaspirés partiellement refroidis dans la chambre de combustion, en un mélange d'une température résultante qui est au moins égale à la température d'allumage du combustible,
    le dispositif d'amenée de combustible comprend des moyens (15) pour l'introduction du combustible dans le mélange gaz d'échappement/air de combustion dans la chambre de combustion (1) dans une zone d'oxydation (19) qui s'établit dans la chambre de combustion, en coopération avec le dispositif d'injection, dans les conditions d'une oxydation essentiellement sans flamme et exempte de pulsation.

14. Dispositif suivant la revendication 13, caractérisé par le fait que le dispositif d'injection comprend une pluralité d'injecteurs (4) disposés en couronne et que le dispositif d'amenée de combustible est réalisé de manière à déboucher (en 15) à l'intérieur de la couronne formée par les injecteurs (4).

15. Dispositif suivant la revendication 14, caractérisé par le fait que l'entraxe minimal (A) des orifices d'injection voisins est supérieur à deux fois le diamètre (d) des orifices d'injection.

16. Dispositif suivant l'une des revendications 14 ou 15, caractérisé par le fait que la distance, mesurée dans le sens d'écoulement, entre le bord des orifices d'injection et la zone dans laquelle le combustible liquide ou gazeux sortant du dispositif d'amenée de combustible est mélangé avec le mélange, est supérieur à six fois le diamètre (d) des orifices d'injection.

17. Dispositif suivant l'une des revendications 14 à 16, caractérisé par le fait que la vitesse de sortie de l'air de combustion par les injecteurs (4) s'élève à au moins 20 m/sec.

18. Dispositif suivant la revendication 16 ou 17, caractérisé par le fait que le dispositif d'amenée de combustible travaillant avec du combustible gazeux ou du combustible liquide finement divisé ou vaporisé comprend un injecteur de combustible (15) qui débouche à une distance prédéterminée en aval des injecteurs d'air de combustion (4).

19. Dispositif suivant la revendication 18, caractérisé par le fait que la distance entre l'injecteur de combustible (15) et les injecteurs d'air de combustion (4) est réglable.

20. Dispositif suivant l'une des revendications 13 à 19, caractérisé par le fait que le dispositif d'amenée d'air et/ou le dispositif d'injection (4) et/ou le dispositif d'amenée de combustible sont commutables entre deux états de fonctionnement différents dans l'un desquels le combustible est brûlé avec excès d'air, avec formation de flamme, et dans l'autre desquels le combustible est oxydé de façon essentiellement sans flamme et exempte de pulsation.

21. Dispositif suivant la revendication 20, caractérisé par le fait qu'il comprend une chambre de combustion (37) débouchant dans la couronne formée par les injecteurs (4), chambre dans laquelle débouche le dispositif d'amenée de combustible (41) et qui présente des entrées d'air de combustion (40), et que des moyens de commande d'air (72) par lesquels le débit d'air de combustion à travers les entrée d'air de combustion (40) et les injecteurs (4) peut être réglé sélectivement sont associés aux entrées d'air de combustion (40) et aux injecteurs (4).

**22.** Dispositif suivant l'une des revendications 13 à 21, caractérisé par le fait qu'il est réalisé sous la forme d'un récupérateur (47, 48) précédant les injecteurs (4) et traversé par l'air de combustion et les gaz d'échappement auxquels de la chaleur utile a été soutirée dans la chambre de combustion (1).

**23.** Dispositif, en particulier suivant l'une des revendications 14 à 21, caractérisé par le fait qu'il est réalisé sous forme de brûleur à récupérateur (60) avec au moins deux unités de récupérateur (63) traversées en alternance par l'air de combustion et les gaz d'échappement refroidis par soutirage de chaleur utile, unités auxquelles sont associés des dispositifs d'inversion (72) pour l'air de combustion et les gaz d'échappement.

**24.** Dispositif suivant la revendication 23, caractérisé par le fait que les unités de récupérateur (63) sont disposées de manière à former une unité en entourant le dispositif d'amenée de combustible (41).

**25.** Dispositif suivant la revendication 24, caractérisé par le fait que les unités de récupérateur (63) sont réalisées chacune en forme de cartouche avec au moins un injecteur d'air de combustion (4) disposé sur le côté frontal tourné vers la chambre de combustion (1).

**26.** Dispositif suivant l'une des revendications 13 à 15, caractérisé par le fait que le dispositif d'amenée de combustible présente un compartiment (80) chauffé, disposé dans la chambre de combustion (1), en particulier pour des matériaux combustibles solides, thermiquement décomposables ou gazéifiables, ce compartiment étant muni d'au moins une sortie (89) débouchant dans la chambre de combustion (1) pour du combustible gazeux produit lors de la gazéification, la sortie de combustible (89) débouchant à l'intérieur de la couronne formée par les injecteurs d'air de combustion (4).

**27.** Dispositif suivant la revendication 26, caractérisé par le fait que le compartiment (80) est réalisé de manière à pouvoir être alimenté en continu avec des matériaux combustibles.

**28.** Dispositif suivant la revendication 27, caractérisé par le fait que le compartiment présente un tube (80) pouvant être obturé sur les deux côtés, ce tube étant muni d'au moins une sortie de combustible (89) et étant disposé de manière à traverser avec étanchéité la chambre de combustion (1).

**29.** Dispositif suivant la revendication 28, caractérisé par le fait que le tube (80) peut être obturé sur les deux côtés par des dispositifs de fermeture (82, 85) et présente une entrée d'oxydant (88).

**30.** Dispositif suivant la revendication 28 ou 29, caractérisé par le fait que le tube (80) présente à une extrémité un dispositif d'amenée de matériaux combustibles (81, 82) et à l'autre extrémité un dispositif d'évacuation (85) pour des résidus de combustion.

Fig. 1

EP 0 463 218 B1

Fig. 2

Nutzwärme Q

Fig. 3

Fig. 4

$S > 6 \cdot d$

$A > 2 \cdot d$

Fig. 5

## Fig. 6

## Fig. 7

Fig. 8

Fig. 9

## Fig. 10